# FASCICULE DE BREVET EUROPEEN

(11) **EP 4 150 139 B1**
(45) Date de publication et mention de la délivrance du brevet: **11.11.2026**
(21) Numéro de dépôt: 21812894.0
(22) Date de dépôt: 11.05.2021
(51) Int. Cl.: H02J 15/00, H02J 3/28, C25C 1/06, C25C 5/02, C25C 7/04, C25C 7/08, F01D 15/10, F23C 99/00, F23D 1/00, F01K 23/06, F22B 1/18, F01D 15/00

(54) **SYSTÈME ET PROCÉDÉ DE STOCKAGE ET DE PRODUCTION D'ÉLECTRICITÉ**
SYSTEM UND VERFAHREN ZUR SPEICHERUNG UND ERZEUGUNG VON ELEKTRIZITÄT
SYSTEM AND METHOD FOR STORING AND GENERATING ELECTRICITY

(30) Priorité: 14.05.2020 CA 3080734
(43) Date de publication de la demande: 22.03.2023
(73) Titulaire: Hydro-Québec, Montréal, Québec H2A 1A4 (CA)
(72) Inventeur: NESREDDINE, Hakim, Trois-Rivières, Québec G9B 2B4 (CA); HOULACHI, Georges, Pointe Claire, Québec H9R 2X3 (CA); MARYNOWSKI, Tom, Trois-Rivières, Québec G9B 2L9 (CA); VILLEMURE, Claude, Trois-Rivières, Québec G8Y 5V1 (CA)
(74) Mandataire: Lavoix
(86) Numéro de dépôt international: PCT/CA2021/050656
(87) Numéro de publication internationale: WO 2021/237338

(56) Documents cités:
- DE-A1- 102009 043 169
- FR-A1- 2 872 716
- BERGTHORSON JEFFREY M.: "Recyclable metal fuels for clean and compact zero-carbon power", PROGRESS IN ENERGY AND COMBUSTION SCIENCE., vol. 68, 1 September 2018 (2018-09-01), NL, pages 169 - 196, XP055876570, ISSN: 0360-1285, DOI: 10.1016/j.pecs.2018.05.001
- SAM KOOHI-KAMALI ET AL: "Emergence of energy storage technologies as the solution for reliable operation of smart power systems: A review", RENEWABLE AND SUSTAINABLE ENERGY REVIEWS, vol. 25, 1 September 2013 (2013-09-01), US, pages 135 - 165, XP055358099, ISSN: 1364-0321, DOI: 10.1016/j.rser.2013.03.056
- BERGTHORSON, JEFFREY M.: "Recyclable metal fuels for clean and compact zero- carbon power", PROGRESS IN ENERGY AND COMBUSTION SCIENCE, vol. 68, September 2018 (2018-09-01), pages 169 - 196, XP055876570
- KOOHI-KAMALI ET AL.: "Emergence of energy storage technologies as the solution for reliable operation of smart power systems: A review", RENEWABLE AND SUSTAINABLE ENERGY REVIEWS, vol. 25, 2013, pages 135 - 165, XP055358099, DOI: 10.1016/j.rser.2013.03.056
- HULSBOS M R : "Metal Energy Carriers: Renewable Fuels of the Future", INTERNATIONAL WORKSHOP ON CLEAN COMBUSTION: PRINCIPLES AND APPLICATIONS, 26 September 2019 (2019-09-26)
- JULIEN PHILIPPE, BERGTHORSON JEFFREY M.: "Enabling the metal fuel economy: green recycling of metal fuels", SUSTAINABLE ENERGY & FUELS, HANS PUBLISHING, vol. 1, no. 3, 1 January 2017 (2017-01-01), pages 615 - 625, XP055876572, ISSN: 2164-9219, DOI: 10.1039/C7SE00004A

## Description

### DOMAINE

La présente divulgation porte sur un système et procédé de stockage et de production d'électricité. Plus spécifiquement, elle décrit une centrale électrique configurée pour absorber, convertir, stocker et restituer de l'électricité d'un réseau électrique en utilisant un vecteur énergétique métallique.

### ÉTAT DE L'ART

Les sources de puissance et d'énergie proviennent traditionnellement des centrales hydrauliques, au gaz, au charbon, nucléaire, ainsi que des centrales éoliennes, photovoltaïques, etc. Ces sources ont la particularité de générer de l'électricité en transformant une tierce source d'énergie. On peut ensuite ajouter des sources d'appoint qui absorbent l'énergie électrique du réseau pour en retourner une puissance au moment opportun. Ces sources sont normalement la batterie, la roue d'inertie et l'hydro-pompage. Il existe, cependant, certaines limitations associées à ces sources d'appoint. Par exemple, l'hydro-pompage subit la même problématique géographique et environnementale que les centrales hydrauliques. Un autre exemple est la technologie des batteries qui est limitée dans le stockage d'énergie. Il y a donc place à l'amélioration.

BERGTHORSON, Jeffrey M; Recyclable metal fuels for clean and compact zero-carbon power; Progress in Energy and Combustion Science, 2018, vol. 68, p. 169-196 porte sur l'utilisation de combustibles métalliques comme vecteurs recyclables d'énergie propre. BERGTHORSON donne un aperçu du concept de combustibles métalliques à faible teneur en carbone et affirme que les métaux recyclables sont les vecteurs d'énergie chimique les plus viables, ou électrocarburants, et les produits énergétiques durables commercialisables à l'échelle mondiale qui ont été proposés à ce jour, en raison de leurs densités énergétiques massiques et volumétriques élevées, de leur capacité à les produire/recycler avec des processus de réduction à zéro carbone, leur cycle énergétique prometteur par rapport à d'autres options de stockage d'énergie chimique sans carbone, leur faible coût par rapport aux batteries utilisant le même métal comme combustible, la possibilité de les transporter par les réseaux de transport maritime, ferroviaire et routier existants, et la capacité de les stocker pendant de longues périodes sans perte dans le cadre de réserves d'énergie. Cependant, BERGTHORSON n'enseigne ni ne suggère un système à poudre métallique/oxyde métallique configuré pour fonctionner en deux modes, ni que l'oxydation et la réduction doivent être effectuées dans un seul système de stockage et de production d'électricité relié à un même réseau électrique, ni d'utiliser des poudres métalliques et des oxydes métalliques pour absorber de l'énergie et fournir de l'énergie au même réseau électrique.

### SOMMAIRE

Selon un aspect, un système de stockage et de production d'électricité selon la revendication 1 est décrit.

Selon un aspect, une méthode de stockage et de production d'électricité selon la revendication 13 est décrite.

D'autres objets, avantages, aspects et caractéristiques de l'invention deviendront plus clairs et seront mieux compris au vu de la description non limitative de l'invention, et grâce aux figures présentes dans la demande.

### DESCRIPTION BRÈVE DES DESSINS

Figure 1 est un schéma d'un système de stockage et de production d'énergie, selon un mode de réalisation.
Figure 2 est un schéma démontrant le système de la Figure 1 connecté à un réseau électrique et agissant en tant que centrale électrique.
Figure 3 est un schéma d'une centrale métallique, selon un mode de réalisation.
Figure 4 est un schéma d'un procédé de production de combustible métallique, selon un mode de réalisation.
Figure 5 est un schéma d'un procédé de production d'électricité par la combustion de métal, selon un mode de réalisation.
Figures 6A à 6D sont des schémas illustrant des configurations exemplaires d'un centrale électrique connecté à un ou deux réseaux électriques.

### DESCRIPTION DÉTAILLÉE

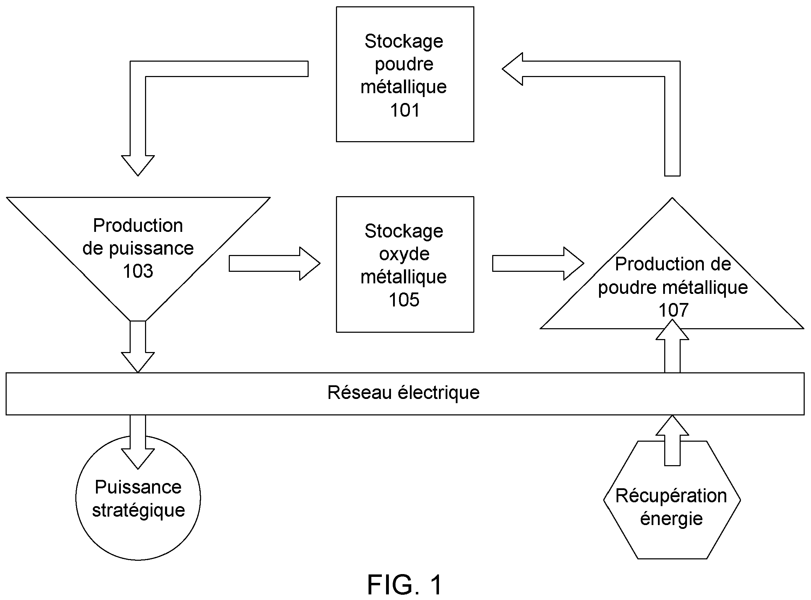

Avec référence à la figure 1, un système de stockage et de production d'électricité est illustré schématiquement selon un mode de réalisation. Décrit de façon générale, le système permet de stocker de l'énergie sous forme de poudre métallique et de produire ensuite une puissance électrique au moment voulu à partir de la combustion de la poudre métallique. Le système se comporte donc à la fois comme une source électrique et une charge électrique.

Dans le mode de réalisation illustré, le système comprend un premier module de stockage 101 et un deuxième module de stockage 105, un module de production de puissance 103, et un module de production de poudre métallique 107. Le module de production de poudre métallique 107 permet de stocker de l'énergie en utilisant de l'électricité pour transformer de l'oxyde métallique en poudre métallique. Le module de production de puissance 103 permet ensuite de produire une puissance électrique au moment voulu à partir de la combustion de la poudre métallique.

Les modules de stockage 101 et 105 permettent de stocker la poudre métallique de l'oxyde métallique comme intermédiaire entre le module de production de puissance 103 et le module de production de poudre métallique 107. Par exemple, le premier module de stockage 101 peut servir à stocker la poudre métallique produite par le module de production de poudre métallique 107 pour une période indéterminée avant qu'il soit utilisé comme combustible dans le module de production de puissance 103. Similairement, le deuxième module de stockage 105 peut servir à stocker l'oxyde métallique créé par la combustion de la poudre métallique dans le module de production de puissance 103 pour une période indéterminée, avant qu'il soit fourni au module de production de poudre métallique 107 pour la reconstitution en poudre métallique.

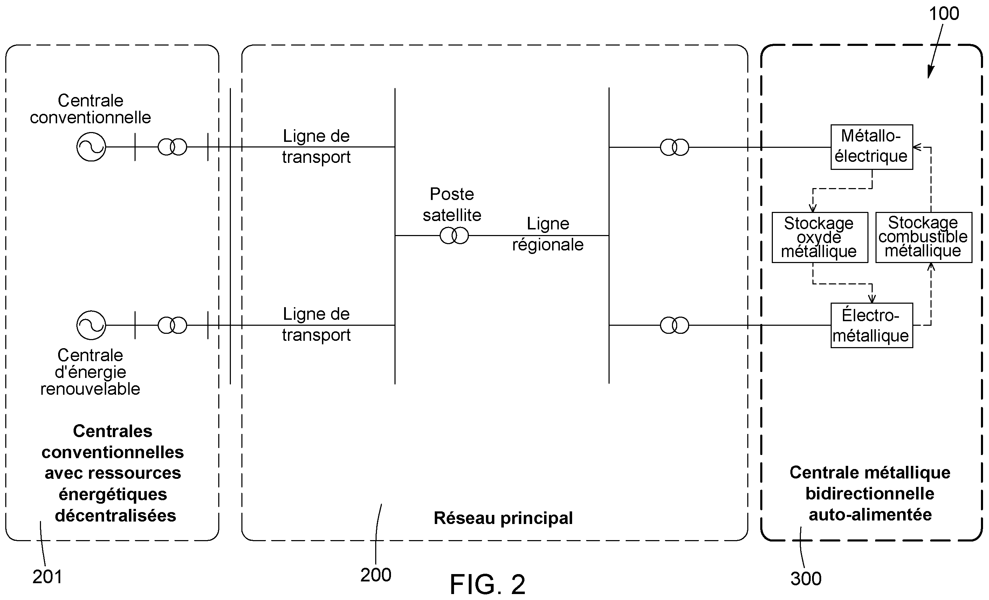

Dans un mode de réalisation préférentiel, tel qu'illustré dans la Figure 2, le système 100 peut être connecté à un réseau électrique 200 alimenté par des centrales conventionnelles. Ces centrales conventionnelles peuvent comprendre exclusivement des centrales à production non variable (par exemple des centrales hydroélectriques), exclusivement des centrales à production variable, ou une combinaison des deux. Il est apprécié que les centrales conventionnelles peuvent être couplées à des ressources énergétiques décentralisées 201. Dans une telle configuration, le système peut opérer en tant que centrale électrique 300 configurée à absorber et à convertir, stocker, et restituer l'électricité du réseau électrique 200. Par exemple, lors d'une période de forte demande d'énergie sur le réseau électrique 200 (ex : à la suite d'une détermination qu'il y a une forte demande ou une insuffisance d'énergie sur le réseau, et/ou qu'il serait plus rentable de stocker de l'énergie plutôt que de la produire), la centrale 300 peut être opérée dans un premier mode selon lequel de l'électricité supplémentaire est produite par la combustion des poudres métalliques pour appuyer le réseau. Lors d'une période de basse demande d'énergie sur le réseau électrique 200 (ex : à la suite d'une détermination qu'il y a une basse demande ou un surplus d'énergie sur le réseau, et/ou qu'il serait plus rentable de produire et fournir de l'énergie plutôt que de la stocker), la centrale 300 peut être opérée dans un deuxième mode selon lequel de l'électricité excédentaire sur le réseau est stockée par la reconstitution des poudres métalliques. De cette façon, la centrale 300 peut agir comme une centrale d'appoint qui utilise de l'énergie stockée lorsqu'il y a un excédant pour compléter la production d'énergie principale sur un réseau lorsque celle-ci est insuffisante (ex : lorsque l'énergie produite par une source non variable est insuffisante à combler aux besoins qui peuvent varier de manière saisonnière ou temporelle). La centrale 300 peut également être opérée dans un troisième mode selon lequel elle est au repos et ne produit ni n'absorbe de l'énergie, et/ou dans un quatrième mode selon lequel elle est utilisée comme machine tournante pour fournir des services réseau complémentaires au réseau électrique 200.

Comme on peut l'apprécier, la centrale 300 diffère des systèmes de stockage d'électricité traditionnelle au moins en partie en raison du fait qu'elle utilise la poudre métallique en tant que vecteur énergétique, combustible et medium de stockage. On peut ainsi référer à la centrale 300 comme une centrale métallique. La centrale électrique 300 peut mettre en œuvre plusieurs procédés liés à la réduction de l'oxyde métallique en métal combustible, leur stockage, et leur convoyage, ainsi que tout procédé lié à la combustion du métal et le stockage et convoyage de l'oxyde métallique produit en conséquence. Comme sera décrit en plus de détails ci-dessous, la centrale 300 peut comprendre plusieurs modules et composantes. Celles-ci peuvent être divisées en plusieurs sous-sites qui font tous partie de la centrale 300. Par exemple, il peut y avoir un sous-site de production de poudre métallique, un sous-site de production d'électricité et des sous-sites de stockage de poudre métallique et/ou d'oxyde. Ces sous-sites peuvent être interconnectés avec des moyens d'approvisionnement en continu tel que des convoyeurs ou d'autres moyens de transport. Dans certains modes de réalisation, les sous-sites sont situés proches l'un de l'autre, par exemple sur le même site et à l'intérieur d'une distance maximale de 100km ou même 50km. On peut également comprendre que dans certains modes de réalisation, les sous-sites peuvent être tous branchés sur un même réseau électrique. Dans d'autres modes de réalisations, les sous-sites, modules et/ou composantes peuvent être situés sur des sites différents, par exemple sur des sites distants mais dans la même région, sur des sites localisés dans deux régions ou territoires différents, sur des sites espacés par une distance supérieure à 50km ou préférablement 100km, et/ou sur des sites branchés sur des réseaux électriques différents.

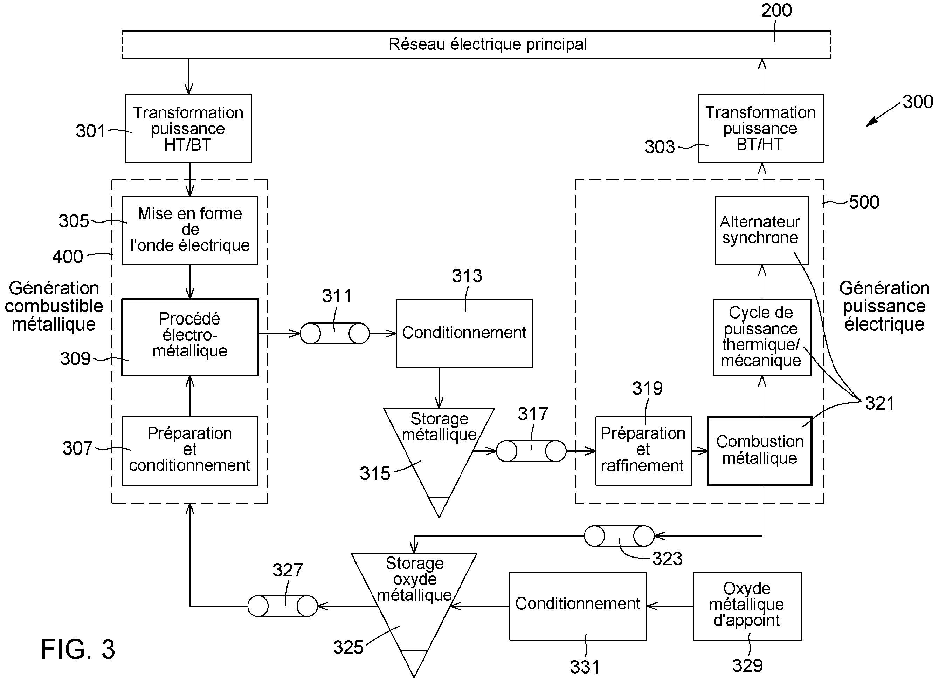

Avec référence à la Figure 3, une centrale métallique 300 est illustrée selon un mode de réalisation préféré. Dans le présent mode de réalisation, la centrale 300 est interconnectée à un réseau électrique 200 qui correspond à un réseau de puissance principale triphasée. Comme on peut l'apprécier, les modules et composants de la centrale métallique 300 peuvent opérer à une tension plus basse qu'une tension du réseau électrique 200 qui sert à transporter l'électricité sur une longue distance. On peut donc décrire le réseau électrique 200 comme opérant à haute tension (HT), alors que la centrale métallique 300 opère à basse tension (BT). Il est apprécié, cependant, que les termes « haute » et « basse » sont des termes relatifs, et que les valeurs de **HT** et BT peuvent varier d'un cas à un autre. Au vu des différences de tensions, l'interconnexion entre la centrale 300 et le réseau électrique 200 comprend un ou plusieurs modules de transformation. Par exemple, dans le présent mode de réalisation, l'interconnexion comprend un module de transformation HT/BT 301 pour soutirer du courant électrique du réseau 200 (réseau source) et un module de transformation BT/HT 303 pour injecter du courant électrique au réseau 200 (réseau récepteur). Chacun des modules de transformation 301 et 303 peut comprendre leurs propres transformateurs de tension ou peut utiliser alternativement les mêmes transformateurs selon le mode d'opération de la centrale 300. Bien que deux modules de transformation 301 et 303 aient été décrits en lien avec le présent mode de réalisation, il est apprécié qu'un seul module de transformation bidirectionnel puisse être fourni dans d'autres modes de réalisation. Le module de transformation peut aussi bien être un transformateur classique de tension/courant ou un ensemble qui contient des technologies de conversion de puissance de type redresseur et onduleur et tout appareillage accessoire.

Bien que dans le présent mode de réalisation, la centrale 300 est connectée à un seul réseau électrique 200 qui agit comme réseau source et réseau récepteur, on peut apprécier que dans d'autres modes de réalisation, la centrale 300 peut être connectée à deux réseaux électriques distincts. Par exemple, la centrale 300 peut être située à la frontière entre deux réseaux électriques, et peut être configurée pour absorber de l'électricité de l'un des réseaux (réseau source) et injecter de l'électricité dans l'autre réseau (réseau récepteur).

Comme décrit de façon générale ci-dessus, la centrale 300 est configurée pour absorber et stocker de l'énergie provenant du réseau électrique 200 par la production/régénération de combustible métallique. Dans le présent mode de réalisation, la centrale 300 met en œuvre un procédé de production de combustible métallique 400 qui utilise l'électricité BT provenant du module de transformation HT/BT 301 afin de régénérer du combustible métallique à partir de l'oxyde métallique stocké dans la centrale 300.

La centrale 300 peut comprendre plusieurs modules pour mettre en œuvre le procédé 400, tel qu'un module de mise en forme de l'onde électrique 305, un module de préparation et conditionnement de l'oxyde métallique 307, et un module de production de poudre métallique 309. Dans le présent mode de réalisation, le module de production de poudre métallique 309 est configuré pour produire du combustible métallique par un procédé électrolytique. Le module 305 est donc configuré pour conditionner l'alimentation électrique provenant du module de transformation HT/BT 301 pour une utilisation dans le cadre d'un procédé d'électrolyse. Similairement, le module 307 est configuré pour préparer et/ou conditionner de l'oxyde métallique d'une manière appropriée pour une utilisation dans le cadre d'un procédé d'électrolyse. Il convient de noter que d'autres configurations sont possibles. Par exemple, le module de transformation 309 peut être configuré pour produire le combustible métallique par d'autres procédés, tel qu'une réduction directe chimique des oxydes, par exemple par l'hydrogène ou par électrolyse en milieu alcalin. Dans de tels cas, les modules 305 et 307 peuvent être configurés pour conditionner respectivement le signal électrique et les oxydes selon les besoins.

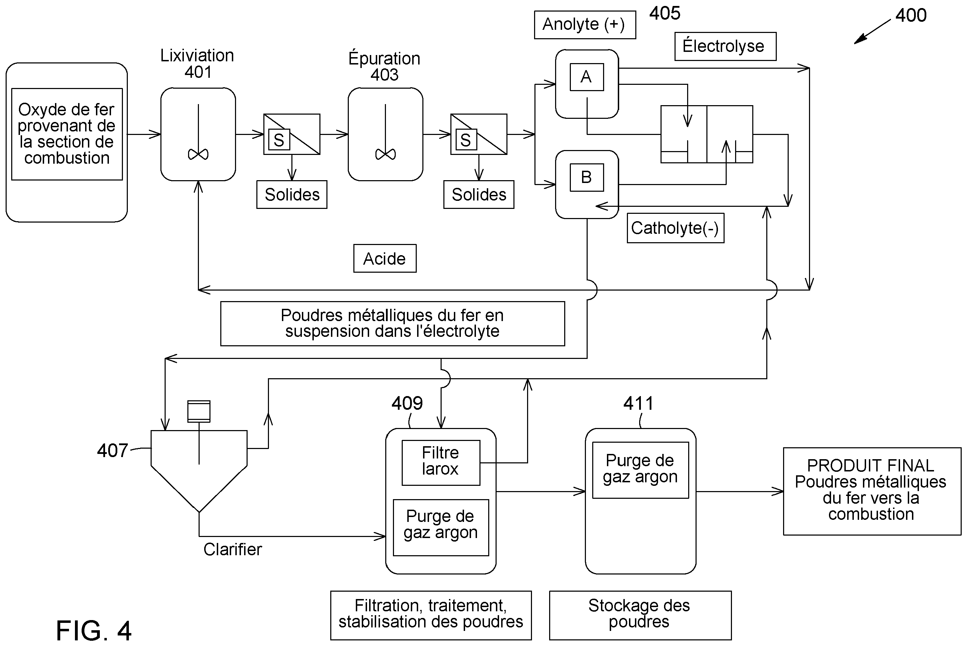

Avec référence à la Figure 4, un procédé de production de combustible métallique 400 est illustré en plus de détail. Dans le mode de réalisation illustré, le procédé est configuré pour produire du fer à partir de l'oxyde de fer par moyen du procédé d'électrolyse. Le procédé permet de produire le fer en forme de poudre en vue d'une utilisation comme combustible. Plus particulièrement, les conditions d'électrolyse, telles que le courant et la surtension, peuvent être ajustés afin d'obtenir différentes tailles de particules de fer, par exemple allant de 40 à 850 µm. Il convient de noter que, bien qu'un procédé utilisant le fer soit illustré, différents métaux et oxydes correspondants peuvent être utilisés dans d'autres modes de réalisation.

Le procédé 400 comprend une première étape 401 de lixiviation qui permet de transformer de l'oxyde de fer stocké sous forme solide en une solution adaptée à l'électrolyse. Décrit de façon générale, les oxydes de fer produits lors de la combustion des poudres de fer sont collectés pour alimenter des réservoirs de lixiviation. Un mélange et une certaine séparation des agglomérats sont réalisés pour permettre une dissolution efficace de l'oxyde de fer dans l'acide sulfurique.

Par exemple, dans un mode de réalisation, la lixiviation des oxydes de fer peut être effectuée dans trois (3) réservoirs de lixiviation contenant de l'acide sulfurique à une concentration de 50 g / L. La température de la solution peut être maintenue à 40°C et le mélange peut être effectué à l'aide de mélangeurs suspendus. Au cours de la lixiviation, l'oxyde de fer (Fe₂O₃) est dissous et le fer en état ferrique peut être réduit durant les premières heures d'électrolyse par un pré-conditionnement de réduction avant la déposition des poudres.

En fonction de la pureté de l'électrolyte, la solution peut ensuite être traitée dans une étape de purification 403 pour éliminer les impuretés indésirables. Comme on peut l'apprécier, la quantité de ces impuretés peut être réduite si les oxydes métalliques sont purs ou si le combustible a déjà subi plusieurs cycles de combustion/régénération.

Au cours de l'étape de purification 403 et en fonction du type d'impuretés dans les oxydes de fer, plusieurs options de traitement de purification peuvent être envisagées. La quantité et le type d'impureté seront principalement tributaires de la qualité du concentré de minerai de fer ajouté au procédé et du site d'extraction. Par exemple, dans certains modes de réalisation, la purification peut impliquer l'utilisation de résines échangeuses d'ions ou l'ajustement du pH pour précipiter et éliminer les impuretés. Le type d'équipement requis à cette étape dépend des impuretés à éliminer. Par exemple, dans certains modes de réalisation, deux (2) réservoirs de 50 m³ et un filtre-presse (type "plate-and-frame") peuvent être fournis.

Après que la solution soit purifiée, la solution est traitée dans une étape d'électrolyse 405 pour produire les poudres de fer. La solution purifiée provenant du processus de lixiviation peut être alimentée dans des cellules électrolytiques, où le fer se plaque aux cathodes, l'oxygène se dégage à l'anode, et de l'acide sulfurique se régénère à l'anode. Cet acide peut être recyclé dans l'étape de lixiviation 401 pour dissoudre de nouveaux oxydes de fer.

Les réactions qui se produisent dans une cellule électrolytique lors du dépôt de fer à partir d'une solution contenant du sulfate de fer peuvent s'écrire comme suit:
À la cathode :

   Fe⁺⁺ + 2e = Fe

   H⁺ + e = ½ H₂

   Fe⁺⁺⁺ + e = Fe⁺⁺
À l'anode :

   SO₄⁻ - 2e + H₂O = H₂SO₄ + ½ O₂

   Fe⁺⁺ - e = Fe⁺⁺⁺

Pour que le dépôt de fer soit efficace, le fer doit être déposé à partir de son état d'oxydation ferreux. Cependant, à l'anode les ions ferreux peuvent être oxydés en leur état ferrique, affectant ainsi l'efficacité globale du processus. Ceci peut être contourné en ayant deux circulations d'électrolytes indépendantes : la cathode et l'anode (A et B), séparées par une membrane anionique pour éviter le passage d'ions ferreux à la chambre de section anodique. L'électrolyte peut être circulé à un débit élevé d'électrolyte dans le compartiment catholyte pour permettre un retrait facile de la poudre de fer maintenue en vrac à la surface de la cathode. Comme on peut l'apprécier, les paramètres de l'électrolyse peuvent être variés selon les besoins. Par exemple, la densité de courant sur les électrodes peut être élevée à 1000 A/m², mais d'autres paramètres sont possibles.

Une prochaine étape 407 peut consister à récupérer les poudres des fers de la section d'électrolyse. Comme on peut l'apprécier, le flux d'électrolyte élevé peut permettre de détacher les poudres de fer de la surface de la cathode. Un décanteur pourra ensuite être utilisé pour récupérer les poudres métalliques formées sur la cathode. Ceci est un équipement standard utilisé dans l'industrie hydro métallurgique. Les poudres sont récupérées au fond du réservoir et la solution claire (trop-plein) peut être recyclée dans la section d'électrolyse.

Une prochaine étape 409 peut consister à laver et filtrer le soutirât (boue de poudre métallique) du décanteur. Ceci permet d'enlever la solution électrolytique des boues de poudre de fer et de produire des poudres métalliques humides. Il est à noter que différents équipements de filtrage peuvent être utilisés à cette fin, tel qu'un filtre-presse à plaques et à cadre. Dans le présent mode de réalisation, un filtre Larox est utilisé, mais il est apprécié que d'autres types de filtres puissent être utilisés.

Une étape finale 411 peut consister à stabiliser ou à passiver les poudres de fer en préparation pour le stockage. Le but de cette étape est de rendre inerte la poudre de fer vis-à-vis de l'oxydation. Dans certains modes de réalisation, l'étape de passivation 411 peut être effectuée alors que la poudre de fer est toujours dans le filtre à presse après la filtration. Par exemple, on peut faire traverser dans le filtre à presse une solution d'acide citrique en guise d'agent de stabilisation. Comme on peut l'apprécier, d'autres agents de stabilisation sont possibles, mais l'acide citrique est préférable pour les aspects environnementaux et également pour sa composition chimique à base de carbone hydrogène et oxygène qui ne dégagera pas d'éléments lourds, toxiques, ou environnementalement problématiques si des traces d'acide persistent dans les poudres à brûler après la passivation. L'étape de passivation 411 peut comprendre également le séchage des poudres de fer. On peut utiliser de différents équipements de séchage, tel que des séchoirs de type lit fluidisé, four rotatif ou par pulvérisation. Si la passivation n'a pas eu lieu lors du pressage, on peut également l'ajouter ou la compléter avant le séchage.

Suite à la stabilisation, les poudres de fer seront prêtes à être stockées pour une durée indéterminée afin d'être éventuellement utilisées comme combustible pour produire de l'électricité en cas de besoin. Dans le présent mode de réalisation, la poudre stabilisée sera prête à être utilisée directement dans le procédé de production de puissance électrique qui sera décrit ci-dessous. Cependant, dans d'autres modes de réalisation, des étapes supplémentaires peuvent être effectuées afin de mettre les poudres en forme pour la combustion. Par exemple, lorsque les poudres de fer sont produites par un procédé de production principal comprenant la réduction directe des oxydes par hydrogène, la taille des particules de fer pourrait se voir réduite au fur et à mesure qu'elles effectuent des cycles complets du procédé (réduction / combustion). Dans de tels cas, une étape d'agglomération peut être effectuée, par exemple, afin de restituer les propriétés physiques/mécaniques initiales des poudres de fer. On peut apprécier que toute autre étape de production de poudre métallique qui contournerait en tout ou en partie le procédé principal de production puisse être effectuée. Par exemple, une portion des poudres métallique peuvent être produites par procédé d'électrolyse (ou autre procédé de production) en parallèle avec la production principale. Comme autre exemple, la production principale peut être temporairement remplacée par un autre processus (tel qu'un procédé d'électrolyse) pendant une certaine période de temps. De cette façon, on peut assurer que les particules aient des propriétés optimales pour la combustion. Par exemple, on pourrait éviter une taille de particule trop fine.

Revenons maintenant à la Figure 3, la centrale 300 comprend un premier moyen de transport 311 pour transporter la poudre métallique produite lors du procédé 400 à un module de conditionnement 313 et un premier module de stockage 315. Comme on peut l'apprécier, le moyen de transport 311 peut comprendre tout type d'équipement qui permet la manutention et le convoyage compatible avec les précautions de sécurité dues aux poudres métalliques. Dans le présent mode de réalisation, le moyen de transport 311 comprend des convoyeurs à courroie pour convoyer les poudres, et un empileur-récupérateur pour manutentionner les poudres. Cependant, d'autres dispositifs sont possibles, tels que des convoyeurs à vis, des convoyeurs à godet, des convoyeurs à vide (« vacuum conveyor »), des convoyeurs pneumatiques, des convoyeurs à gaz comprimé, des camions, d'autres véhicules, etc.

Dans le présent mode de réalisation, les poudres provenant du module de production de poudre métallique 309 sont convoyées vers un module de conditionnement 313. Le module de conditionnement 313 est configuré pour mettre en forme les poudres afin qu'elles puissent être utilisées dans un processus de combustion, tel que celui qui sera décrit en plus de détails ci-dessous. Le module de conditionnement 313 peut comprendre divers équipements pour ce faire, tel que de l'équipement qui permet d'émotter et/ou de tamiser les poudres pour que la poudre ait une taille de particules homogène. Les poudres conditionnées peuvent ensuite être convoyées vers le premier module de stockage 315.

Le premier module de stockage 315 permet de stocker les poudres métalliques pour une durée indéterminée. Dans le présent mode de réalisation, le premier module de stockage 315 comprend un ou plusieurs silos qui permettent d'empiler un grand volume de poudres. Les silos peuvent, par exemple, avoir un design longitudinal ou vertical pour faciliter leur extension et pouvoir répondre aux besoins futurs. À l'intérieur des silos, un empileur-récupérateur peut être fourni pour permettre la manutention des poudres. On peut comprendre, cependant, que d'autres mécanismes peuvent être fournis afin de stocker et/ou de manipuler les poudres. Par exemple, le module de stockage peut comprendre un hangar, et/ou tout site d'entreposage configuré pour manutentionner les poudres et les stocker pendant une durée prolongée.

Comme on peut l'apprécier, les poudres métalliques peuvent être très réactives, ce qui les rend vulnérables à la détérioration (par exemple par oxydation des poudres de fer) et qui pose un risque d'incendie important. Donc, dans un mode de réalisation préférable, les poudres sont manutentionnées et stockées d'une manière sécuritaire et d'une manière qui empêche la détérioration. Par exemple, pour les étapes de manutention et de stockage, l'atmosphère peut être enrichie partiellement ou totalement d'un gaz inerte tel que l'argon ou l'azote. Cette atmosphère peut également être contrôlée en température, humidité et/ou en pression de sorte que l'atmosphère dans le module de stockage est plus haute ou plus basse que la pression atmosphérique ambiante. Ainsi, les risques d'oxydation, de dégradation de l'oxyde métallique et d'incendie sont réduits. D'autres mesures de sécurité peuvent être prises, telles que la mise à la terre des équipements, des capteurs thermiques et des appareils certifiés utilisables en milieu explosif.

Dans certains modes de réalisation, le silo de stockage peut être configuré pour être résistant à la contamination par l'humidité et l'apport d'oxygène, et pour contrôler la génération d'hydrogène, entre autres. Par exemple, le silo peut être rendu étanche afin de réduire l'humidité et l'apport en oxygène. La génération d'hydrogène peut être contrôlée avec des évents fixes ou contrôlables à des positions clés. Il est à noter que d'autres mesures peuvent être prises pour contrôler l'environnement à l'intérieur du silo, au besoin.

Lorsque la centrale 300 est en mode de production d'électricité, un deuxième moyen de transport 317 peut être utilisé pour manutentionner et transporter la poudre métallique vers le module de production de puissance 321. Comme on peut l'apprécier, le deuxième moyen de transport 317 peut comprendre des mécanismes similaires au premier moyen de transport 311, tel qu'un récupérateur qui permet de récupérer la poudre métallique du silo de stockage et un convoyeur à bande qui permet de déplacer la poudre. Bien que ce ne soit pas illustré, il est apprécié que dans certains modes de réalisations, la poudre peut être transportée à un silo temporaire qui est séparé du silo de stockage long terme. Le silo temporaire pourra servir à alimenter directement le module de production de puissance 321.

Comme décrit de façon générale ci-dessus, la centrale 300 est configurée pour produire de l'électricité par la combustion des poudres métalliques. Dans le présent mode de réalisation, la centrale 300 met en œuvre un procédé de production d'électricité 500 qui utilise le combustible stocké dans le module de stockage 313 (le combustible qui a été produit par le procédé 400) afin de produire de l'électricité et des oxydes métalliques comme sous-produits. L'électricité produite est fournie au module de transformation BT/HT 303 pour conversion à la tension nécessaire pour appuyer le réseau électrique 200, et les oxydes métalliques sont stockés dans la centrale 300 pour être réutilisés dans le procédé de production de combustible 400 lorsque la centrale 300 opère de nouveau dans un mode d'absorption d'énergie.

La centrale 300 peut comprendre plusieurs modules pour mettre en œuvre le procédé de production d'électricité 500, tels qu'un module de préparation et de raffinement 319 et un module de production de puissance 321. Comme sera décrit en plus de détail ci-dessous, le module de préparation 319 peut servir à préparer les poudres de telle sorte qu'elles puissent être brûlées de manière optimale. Le module de production de puissance 321 peut servir à brûler la poudre métallique pour alimenter différents types de générateurs qui mettent en œuvre différents cycles de production d'électricité. Par exemple, dans le présent mode de réalisation, le module de production est configuré pour alimenter un fluide moteur à partir de la chaleur de combustion de poudre métallique afin d'entraîner un groupe turbo alternateur. Plus spécifiquement, le cycle de production d'électricité utilisé est un cycle où la combustion de poudre métallique génère de la vapeur d'eau pour actionner une turbine vapeur et pour produire de l'électricité. Il convient de noter que d'autres machines thermiques produisant de l'électricité ou équipements de conversion chaleur-puissance peuvent être utilisés, tel qu'une turbine à gaz à combustion externe, etc. Il convient également de noter que différents types de générateurs et cycles correspondants peuvent être utilisés en fonction des besoins de puissance de la centrale 300. Notamment, dans certains modes de réalisations, le cycle de Brayton à air chaud ou le cycle de Rankine organique (ORC) peut être utilisé.

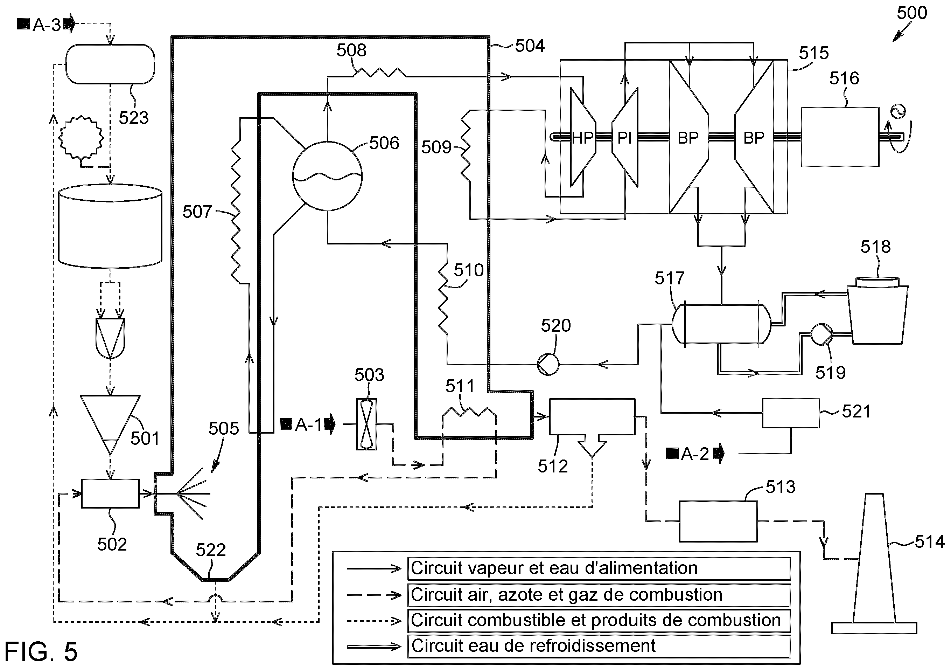

Avec référence à la Figure 5, un procédé de production d'électricité 500 par la combustion de métal est illustré en plus de détail selon un mode de réalisation. Dans un premier temps, le combustible (poudre de fer) provenant d'un silo d'alimentation 501 est mélangé dans un pulvérisateur 502 avec de l'air ambiant A-1 propulsé par un ventilateur haute pression 503. Le mélange préchauffé est introduit dans une chaudière 504 via un brûleur 505. Dans le présent mode de réalisation, les poudres métalliques peuvent avoir une distribution granulométrique allant de 1µm à 350µm avec air atmosphérique pour comburant. Cependant, la taille des particules peut être augmentée en cas d'utilisation de comburant avec une plus grande proportion d'oxygène.

L'énergie thermique de la combustion est utilisée pour convertir de l'eau en vapeur à température et pression élevées. Des tubes d'acier longent les parois de la chaudière dans lesquels l'eau convertie en vapeur est collectée dans un collecteur 506. Les gaz de combustion de la chaudière traversent un générateur de vapeur 507, un surchauffeur 508, un réchauffeur 509, un économiseur 510 et un préchauffeur d'air 511. Par la suite, les gaz traversent un filtre électrostatique 512 et une centrale de traitement des gaz 513 et finissent par s'échapper d'une cheminée 514 dans l'atmosphère.

La vapeur surchauffée à haute pression alimente les divers étages d'une turbine à vapeur 515 couplée à un alternateur 516, ce qui entraîne la rotation de ses aubes. L'énergie de la vapeur est convertie en énergie mécanique dans la turbine à vapeur qui agit comme moteur principal. La pression et la température de la vapeur tombent à une valeur inférieure, et son volume augmente à mesure qu'il passe dans la turbine. La vapeur dégagée à basse pression est évacuée pour être condensée dans un condenseur 517 au moyen d'une circulation d'eau froide provenant d'une tour de refroidissement 518 ou de toute autre source moyennant une pompe de circulation 519. La vapeur perd sa pression ainsi que sa température et est reconvertie en eau.

L'eau condensée est à nouveau amenée à la chaudière par une pompe d'alimentation en eau 520. Une partie de l'eau peut être perdue au cours du cycle, lequel est alimenté de manière appropriée par une source d'eau externe d'appoint A-2 traité dans une station de purification et d'adoucissement 521.

Les produits solides de la combustion, soit les oxydes métalliques (et dans le présent mode de réalisation l'oxyde de fer), sont récupérés à deux endroits soit dans le bas de la chaudière 522 et au niveau du filtre électrostatique. Ces oxydes métalliques peuvent être stockés pour une durée indéterminée afin d'être éventuellement utilisés pour absorber de l'énergie en se reconstituant en poudre métallique avec de l'électricité. Par exemple, l'oxyde de fer peut être acheminé vers une station de production de combustible 523 (tel que le module de production de poudre métallique 309 de la Figure 3) où il sera réduit en poudre de fer. Dans certains modes de réalisations, une éventuelle perte lors de la combustion peut être compensée par un ajout de minerai de fer A-3.

Revenons maintenant à la Figure 3, la centrale 300 comprend un troisième moyen de transport 323 pour transporter les oxydes métalliques produits lors du procédé 500 vers un deuxième module de stockage 325. Comme on peut l'apprécier, l'équipement utilisé dans le troisième moyen de transport 323 et le deuxième module de stockage 325 peut ressembler aux autres moyens de transport 311, 317 et au premier module de stockage 315. Par exemple, le moyen de transport 323 peut comprendre un convoyeur et un empileur-récupérateur, et le deuxième module de stockage 325 peut comprendre un autre silo. Comme on peut l'apprécier, les oxydes métalliques sont dans un état plus stable et moins réactif. De plus, l'oxyde de fer est non toxique. Donc, il n'est pas nécessaire de prendre toutes les mêmes précautions qu'avec le transport, la manutention et le stockage des poudres métalliques, notamment en ce qui concerne l'inflammabilité. Toutefois, certaines précautions peuvent quand même être prises, puisqu'il peut toujours avoir certains risques de sécurité. Par exemple, toute poudre pose des dangers respiratoires et/ou des risques d'explosions. De plus, en cas de combustion partielle lors de la production des oxydes métalliques, il peut en rester un peu de fer. Ce fer risque de produire de l'hydrogène s'il y a un contact avec l'eau/l'humidité. Des précautions peuvent donc être prises lors du transport, de la manutention, et du stockage des oxydes métalliques pour atténuer ces risques.

Lorsque la centrale 300 est en mode de stockage d'électricité, un quatrième moyen de transport 327 peut être utilisé pour manutentionner et transporter l'oxyde métallique vers le module de production de poudre métallique 309, et/ou vers le module de préparation et conditionnement 307 où l'oxyde métallique peut être stocké temporairement en préparation pour le procédé de production de combustible métallique 400. Encore une fois, l'équipement utilisé dans le quatrième moyen de transport 327 peut ressembler aux autres moyens de transport 311, 317, 323.

Comme on peut l'apprécier, le quatrième moyen de transport 327 permet de compléter un circuit de transport du vecteur de stockage physique (la poudre métallique et l'oxyde métallique) entre le module de production de poudre métallique 309 et le module de production de puissance 321. Un cycle global est donc bouclé, le cycle permettant la production des poudres métalliques à partir de l'oxyde métallique en absorbant de l'énergie, la génération de l'énergie en brûlant les poudres métalliques, et la reconstitution des poudres métalliques à partir de l'oxyde métallique en absorbant de l'énergie. On peut donc considérer la centrale 300 comme une boîte noire qui comprend toutes les procédures nécessaires pour mettre en œuvre un procédé global de transformation bidirectionnelle entre l'électricité et la poudre métallique. En d'autres mots, la centrale 300 peut régénérer son propre combustible métallique à partir de ses résidus de combustion.

Dans certains modes de réalisations, il pourra être nécessaire d'injecter de l'oxyde métallique et/ou des poudres métalliques dans la centrale 300, par exemple pour compenser pour les pertes solides qui peuvent se produire lors de la combustion des poudres métalliques, et/ou lors de la reconstitution des poudres métalliques (par exemple si la reconstitution des poudres métalliques est effectuée par réduction directe des oxydes de fer par de l'hydrogène). L'injection de l'oxyde métallique et/ou des poudres métalliques est aussi nécessaire pour commencer le premier cycle de la centrale 300 ou pour augmenter la capacité de la centrale 300 à absorber et/ou générer de l'électricité. Comme on peut l'apprécier, l'injection peut se faire de certaines manières. Par exemple, tel qu'illustré sur la Figure 3, de l'oxyde métallique d'appoint 329 peut être transporté d'un site externe, conditionné, et introduit dans le deuxième module de stockage 325. Dans d'autres modes de réalisation, de l'oxyde de fer neuf peut être introduit directement à l'étape de lixiviation dans le procédé électrolytique 400. On peut comprendre également que l'oxyde métallique peut être remplacé par du nouvel oxyde « frais » d'un site externe, par exemple si l'oxyde métallique dans la centrale 300 s'est dégradé au cours de plusieurs années d'utilisation. L'injection et/ou le remplacement des poudres métalliques pourrait aussi être effectué d'une manière similaire.

Dans un mode de réalisation, tous les équipements nécessaires pour mettre en œuvre le cycle d'absorption et de génération d'électricité (tel que les moyens de transport 311, 317, 323, 327, les modules de stockage 315, 325, les modules de transformation 309, 321, ainsi que tout module accessoire) peuvent être substantiellement tous alimentés par une source d'énergie commune. Par exemple, tous les équipements pourraient être alimentés par la centrale 300, par un circuit électrique local de la centrale 300 (par exemple un circuit à BT), par un réseau électrique commun (par exemple un réseau à HT) et/ou appuyés par d'autres sources d'énergie, tel qu'une génératrice pour le démarrage. Dans certains modes de réalisation, au moins le module de production de poudre métallique et le module de production de puissance sont les deux branchés sur le même réseau électrique. De cette façon, la centrale 300 peut opérer de façon substantiellement autosuffisante, sans avoir besoin de l'énergie ou d'autres contributions externes. La centrale pourra donc absorber ou générer de l'énergie sur demande d'une manière qui est substantiellement renouvelable et autonome.

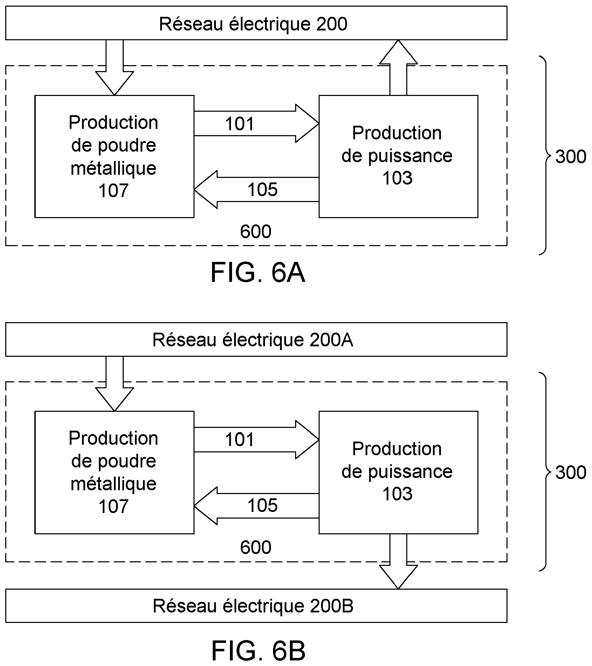

Bien qu'une configuration exemplaire de la centrale 300 a été décrite ci-dessus pour absorber et fournir de l'électricité à un réseau 200, il est apprécié que plusieurs configurations de la centrale 300 et ses modules sont possibles afin d'intégrer la centrale dans de différentes configurations de réseaux électriques. Quelques configurations exemplaires sont illustrées sur les Figures 6A à 6D, mais il est apprécié que d'autres configurations sont aussi possibles.

Dans une première configuration illustrée sur la Figure 6A, la centrale 300 est configurée pour absorber et fournir de l'énergie au même réseau 200. Le module de production de puissance 103 et le module de production de poudre métallique 107 sont physiquement situés sur un site commun 600. Ce site commun 600 peut correspondre à un chantier commun (par exemple qui peut comprendre un ou plusieurs établissements, bâtiments, etc.), à une région géographique commune (tel qu'une municipalité, ville, etc.), et/ou à tout emplacement où les modules 103 et 107 se situent dans le même pays ou territoire, par exemple à moins de 100km l'un de l'autre, ou même à moins de 50km l'un de l'autre. Dans cette configuration, la centrale 300 peut servir à équilibrer la puissance du réseau 200 global lors des fluctuations saisonnières par exemple.

Dans une deuxième configuration illustrée sur la Figure 6B, la centrale 300 est configurée pour absorber de l'énergie d'un premier réseau 200A, et pour fournir de l'énergie à un deuxième réseau 200B qui est différent du premier réseau 200A. Le module de production de puissance 103 et le module de production de poudre métallique 107 sont physiquement situés sur un site commun 600. Ce site commun 600 peut correspondre à un chantier commun (par exemple qui peut comprendre un ou plusieurs établissements, bâtiments, etc.), à une région géographique commune (tel qu'une municipalité, ville, etc.), et/ou à tout emplacement où les modules 103 et 107 se situent dans deux régions différentes dans un même territoire, ou même transfrontalières, par exemple à des emplacement qui se situent à moins de 100km l'un de l'autre ou même à moins de 50km l'un de l'autre. Les modules 103 et 107 peuvent être situés, par exemple, à proximité d'une frontière entre les deux réseaux 200A et 200B. Dans certaines configurations, les deux réseaux 200A et 200B peuvent être des réseaux d'un même pays, territoire, dominion, municipalité, ville, etc. pour absorber et fournir de l'énergie à deux réseaux distincts du même pays, territoire, dominion, municipalité, ville, etc. Dans d'autres configurations, les deux réseaux 200A et 200B peuvent être des réseaux de différents pays, territoires, dominions, municipalités, ville, etc. Dans cette configuration, l'énergie peut être absorbée d'un premier réseau 200A d'un premier pays, territoire, dominion, municipalité, ville, etc., et fournie ou vendue à un deuxième réseau 200B d'un pays, territoire, dominion, municipalité, ville, etc. distinct. Ces deux réseaux peuvent appartenir et/ou être opéré par la même propriétaire ou opérateur, ou par des différents propriétaires ou opérateurs.

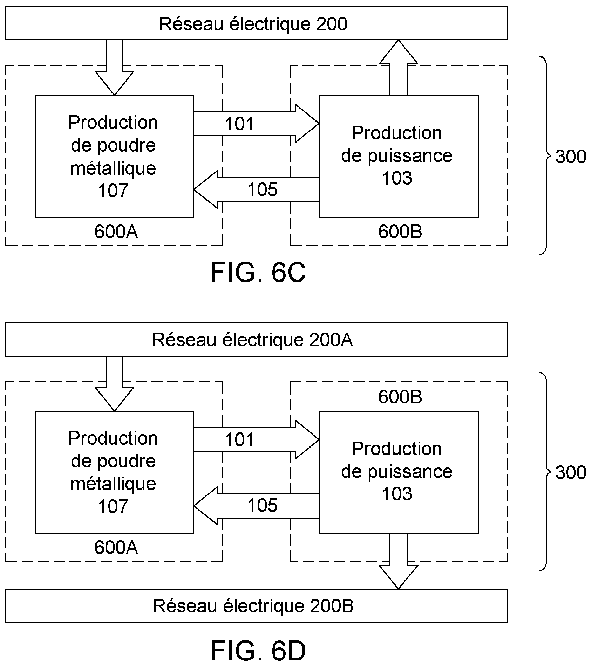

Dans une troisième configuration illustrée sur la Figure 6C, la centrale 300 est configurée pour absorber et fournir de l'énergie au même réseau 200. Cependant, le module de production de puissance 103 est physiquement situé sur un premier site 600A, alors que le module de production de poudre métallique 107 est physiquement situé sur un deuxième site 600B qui est différent du premier site 600A. Ces sites 600A et 600B peuvent correspondre à des chantiers distincts (par exemple qui peuvent chacun comprendre un ou plusieurs établissements, bâtiments, etc.), à des régions géographiques distinctes (tel que de municipalité, ville, etc. différentes), et/ou à tout emplacement où les modules 103 et 107 sont distants l'un de l'autre dans le même territoire (ou dans toute région desservie par le même réseau 200), par exemple des emplacements qui sont distants de plus de 100km l'un de l'autre dans le même territoire. Dans cette configuration, la centrale 300 peut permettre de distribuer de l'énergie sur des zones plus étendues et/ou à des endroits stratégiques d'un même réseau, par exemple pendant des fluctuations saisonnières ou d'autres fluctuations temporelles du réseau 200. Comme on peut l'apprécier, les modules de stockage 101, 105 peuvent être situés sur l'un ou l'autre des sites 600A, 600B et/ou à des sites intermédiaires. On peut également apprécier que les modules de transport puissent être adaptés pour transporter les oxydes et les poudres métalliques sur de plus longues distances.

Dans une quatrième configuration illustrée sur la Figure 6D, la centrale 300 est configurée pour absorber de l'énergie d'un premier réseau 200A, et pour fournir de l'énergie à un deuxième réseau 200B qui est différent du premier réseau 200A. De plus, le module de production de puissance 103 est physiquement situé sur un premier site 600A, alors que le module de production de poudre métallique 107 est physiquement situé sur un deuxième site 600B qui est différent du premier site 600A. Ces sites 600A et 600B peuvent correspondre à des chantiers distincts (par exemple qui peuvent chacun comprendre un ou plusieurs établissements, bâtiments, etc.), à des régions géographiques distinctes (tel que de municipalité, ville, etc. différentes), et/ou à tout emplacement où les modules 103 et 107 sont distants l'un de l'autre dans le même territoire, par exemple lorsque les modules sont à une distance de plus de 100km l'un de l'autre dans le même territoire. Les modules 103 et 107 peuvent être situés, par exemple, à proximité d'une frontière entre les deux réseaux 200A et 200B. Dans certaines configurations, les deux réseaux 200A et 200B peuvent être des réseaux d'un même pays, territoire, dominion, municipalité, ville, etc. pour absorber et fournir de l'énergie à deux réseaux distincts du même pays, territoire, dominion, municipalité, ville, etc. Dans d'autres configurations, les deux réseaux 200A et 200B peuvent être des réseaux de territoires, dominions, municipalités, villes, etc. différentes. Dans cette configuration, l'énergie peut être absorbée d'un premier réseau 200A d'un premier territoire, dominion, municipalité, ville, etc., et fournie à un deuxième réseau 200B d'un territoire, dominion, municipalité, ville, etc. distincts. Ces deux réseaux peuvent appartenir et/ou être opéré par la même propriétaire ou opérateur, ou par des différents propriétaires ou opérateurs. Comme on peut l'apprécier, les modules de stockage 101, 105 peuvent être situés sur l'un ou l'autre des sites 600A, 600B et/ou à des sites intermédiaires. On peut également apprécier que les modules de transport puissent être adaptés pour transporter les oxydes et les poudres métalliques sur de plus longues distances.

Comme on peut l'apprécier, la centrale métallique 300 décrite ci-dessus peut avoir plusieurs avantages par rapport aux centrales traditionnelles. Son principe de fonctionnement est la conversion d'électricité (énergie) métal-électricité (puissance), qui permet une conversion complexe de l'énergie électrique en énergie métallique, et vice-versa. Le métal sous forme de poudre ou de grain sert de vecteur de stockage physique.

La centrale métallique peut également convertir une grande quantité d'oxyde métallique en poudre métallique en utilisant de l'électricité. Le métal, peu importe sa composition chimique, demeure toujours sur place. Sous forme solide, il ne nécessite pas d'effort supplémentaire tel que la compression d'un gaz ou la contre-pression de l'étanchéité hydraulique d'un réservoir d'eau. Seuls les électrons, l'oxygène et le métal se déplacent.

La poudre métallique peut être utilisée comme combustible pour alimenter une centrale à cycle thermique. Donc, la localisation d'une centrale métallique ne dépend pas d'une situation géographique en région éloignée. Elle pourrait être installée à proximité d'un centre à grande demande de puissance ou à un point stratégique pour le transporteur. Par exemple, le métal pourrait être le fer qui est disponible en grande quantité dans certaines régions du globe. Il est également possible d'utiliser d'autres types de métaux tels que le silicium, l'aluminium, le fero-silicium, le magnésium, etc.

La centrale métallique peut aussi disposer d'une faible emprise au sol (particulièrement en comparaison au stockage Hydro pompé de longue durée), et peut disposer d'une très bonne possibilité d'augmentation de la capacité de stockage de longue durée. La centrale peut donc évoluer facilement pour répondre à des besoins de puissance pour de plus grandes périodes. La capacité d'absorber la puissance est définie par la partie reconstitution des poudres métalliques. La capacité de restituer de la puissance est définie par la partie génération de puissance. Ces deux aspects du procédé sont relativement coûteux. Par contre, le stockage des poudres de fer et d'oxyde de fer peut facilement être augmenté pour un coût bien inférieur aux deux autres aspects du procédé. Il suffit d'augmenter le nombre de silos, par exemple.

Finalement, la centrale électrique a la possibilité d'opérer et/ou d'être désignée en capacité en puissance asymétrique. La centrale peut avoir la capacité d'absorber une puissance maximale différente de la capacité de production en puissance maximale. Ce choix est pourra être influencé entre autres par la réalité économique du marché de l'électricité où la centrale sera implantée, et/ou la réalité opérationnelle des réseaux à laquelle elle sera connectée.

Bien que certains avantages aient été décrits, la personne versée dans l'art peut découvrir d'autres avantages et/ou caractéristiques inhérents à l'invention qui n'ont pas explicitement été décrits. En outre, bien que certaines configurations et certains modes de réalisations aient été décrits ici, il est apprécié qu'ils soient à titre d'exemple uniquement et ne doivent pas être pris de manière à limiter la portée de l'invention, qui est définie par les revendications.

## Revendications

1. Un système de stockage et de production d'électricité (100) configuré pour opérer dans un premier mode dans lequel il fournit de l'énergie à un réseau électrique récepteur (200B), et dans un second mode dans lequel il absorbe de l'énergie d'un réseau électrique source (200A), **caractérisé en ce que** :
- dans ledit premier mode, le système est configuré à produire de l'électricité en utilisant de la poudre métallique comme combustible ; et
- dans ledit second mode, le système est configuré à stocker de l'énergie en utilisant l'électricité du réseau source pour reconstituer la poudre métallique à partir de l'oxyde métallique, et
**en ce que** le réseau électrique récepteur et le réseau électrique source constituent le même réseau électrique.

2. Le système selon la revendication 1, comprenant un module de production de puissance (103) configuré pour générer de l'électricité en brûlant les poudres métalliques, un module de production de poudre métallique (107) configuré pour reconstituer les poudres métalliques à partir des oxydes métalliques avec de l'électricité, et au moins un moyen de transport pour transporter les poudres métalliques et les oxydes métalliques entre le module de production de puissance et le module de production de poudre métallique.

3. Le système selon la revendication 2, selon lequel le module de production de puissance et le module de production de poudre métallique sont espacés l'un de l'autre par une distance inférieure à 100km ou préférablement 50km.

4. Le système selon les revendications 2 ou 3, comprenant un premier module de stockage (101) pour stocker les poudres métalliques, et un deuxième module de stockage (105) pour stocker les oxydes métalliques.

5. Le système selon la revendication 4, selon lequel au moins un des modules de stockage comprend une atmosphère contrôlée en humidité, pression et/ou composition de gaz.

6. Le système selon les revendications 4 ou 5, comprenant au moins un moyen de transport pour transporter les poudres métalliques et les oxydes métalliques entre le premier et le deuxième module de stockage et les modules de production de poudre métallique et de puissance.

7. Le système selon l'une quelconque des revendications 2 à 6, selon lequel les modules de production sont espacés des modules de stockage par une distance inférieure à 100km ou préférablement 50km.

8. Le système selon la revendication 6, selon lequel le réseau électrique récepteur et le réseau électrique source opèrent à une première tension, et les modules de stockage et/ou de transport sont alimentés par une source électrique commune à une deuxième tension plus basse que la première tension.

9. Le système selon la revendication 6, selon lequel les modules de stockage et/ou de transport sont au moins partiellement alimentés par le module de production de puissance.

10. Le système selon l'une quelconque des revendications 2 à 9, selon lequel le module de production de puissance est configuré pour alimenter un fluide moteur à partir de la chaleur de combustion de poudre métallique afin d'entraîner un groupe turbo alternateur ou autres machines thermiques produisant de l'électricité.

11. Le système selon l'une quelconque des revendications 2 à 10, selon lequel le module de production de poudre métallique est configuré pour reconstituer la poudre métallique par électrolyse.

12. Le système selon l'une quelconque des revendications 2 à 11, selon lequel le module de production de poudre métallique est configuré pour régénérer la poudre métallique par réduction directe des oxydes métalliques par hydrogène ou par électrolyse en milieu alcalin.

13. Une méthode de stockage et de production d'électricité, comprenant les étapes suivantes :
- absorber de l'énergie d'un réseau électrique source en utilisant l'électricité du réseau électrique source pour reconstituer de la poudre métallique à partir de l'oxyde métallique (400) ;
- produire de l'énergie en utilisant la poudre métallique reconstituée comme combustible (500) ; et
- fournir l'énergie produite à un réseau électrique récepteur,
selon laquelle le réseau électrique récepteur et le réseau électrique source constituent le même réseau électrique.

14. La méthode selon la revendication 13, selon laquelle l'oxyde métallique produite lors de la combustion de la poudre métallique est utilisée pour ensuite absorber l'énergie du réseau électrique source.

15. La méthode selon les revendications 13 ou 14, selon laquelle l'étape d'absorber de l'énergie est effectuée lorsqu'il y a un excédent d'énergie sur le réseau électrique source, et les étapes de produire et fournir l'énergie sont effectuées lorsqu'il y a une insuffisance d'énergie sur le réseau électrique récepteur.

## Patentansprüche

1. Ein Speicher- und Stromerzeugungssystem (100), das dazu konfiguriert ist, in einem ersten Modus zu arbeiten, in dem es einem empfangenden Stromnetz (200B) Energie zuführt, und in einem zweiten Modus, in dem es Energie aus einem Quellstromnetz (200A) aufnimmt, **dadurch gekennzeichnet, dass**:
- in dem genannten ersten Modus das System dazu konfiguriert ist, Elektrizität unter Verwendung von Metallpulver als Brennstoff zu erzeugen; und
- in dem genannten zweiten Modus das System dazu konfiguriert ist, Energie zu speichern, indem es die Elektrizität des Quellstromnetzes verwendet, um das Metallpulver aus dem Metalloxid wiederherzustellen, und dass das empfangende Stromnetz und das Quellstromnetz dasselbe Stromnetz bilden.

2. System nach Anspruch 1, umfassend ein Leistungserzeugungsmodul (103), das dazu konfiguriert ist, Elektrizität durch Verbrennen der Metallpulver zu erzeugen, ein Metallpulver-Erzeugungsmodul (107), das dazu konfiguriert ist, die Metallpulver aus den Metalloxiden unter Verwendung von Elektrizität wiederherzustellen, und mindestens ein Transportmittel zum Transportieren der Metallpulver und der Metalloxide zwischen dem Leistungserzeugungsmodul und dem Metallpulver-Erzeugungsmodul.

3. System nach Anspruch 2, wobei das Leistungserzeugungsmodul und das Metallpulver-Erzeugungsmodul durch eine Entfernung von weniger als 100 km oder vorzugsweise 50 km voneinander beabstandet sind.

4. System nach Anspruch 2 oder 3, umfassend ein erstes Speichermodul (101) zum Speichern der Metallpulver und ein zweites Speichermodul (105) zum Speichern der Metalloxide.

5. System nach Anspruch 4, wobei mindestens eines der Speichermodule eine hinsichtlich Feuchtigkeit, Druck und/oder Gaszusammensetzung kontrollierte Atmosphäre umfasst.

6. System nach Anspruch 4 oder 5, umfassend mindestens ein Transportmittel zum Transportieren der Metallpulver und der Metalloxide zwischen dem ersten und dem zweiten Speichermodul und dem Metallpulver-Erzeugungsmodul und dem Leistungserzeugungsmodul.

7. System nach einem der Ansprüche 2 bis 6, wobei die Erzeugungsmodule von den Speichermodulen durch eine Entfernung von weniger als 100 km oder vorzugsweise 50 km beabstandet sind.

8. System nach Anspruch 6, wobei das empfangende Stromnetz und das Quellstromnetz mit einer ersten Spannung arbeiten und die Speicher- und/oder Transportmodule durch eine gemeinsame elektrische Quelle mit einer zweiten Spannung versorgt werden, die niedriger als die erste Spannung ist.

9. System nach Anspruch 6, wobei die Speicher- und/oder Transportmodule zumindest teilweise durch das Leistungserzeugungsmodul versorgt werden.

10. System nach einem der Ansprüche 2 bis 9, wobei das Leistungserzeugungsmodul dazu konfiguriert ist, ein Arbeitsfluid aus der Verbrennungswärme von Metallpulver zu versorgen, um eine Turbogeneratorgruppe oder andere thermische Maschinen anzutreiben, die Elektrizität erzeugen.

11. System nach einem der Ansprüche 2 bis 10, wobei das Metallpulver-Erzeugungsmodul dazu konfiguriert ist, das Metallpulver durch Elektrolyse wiederherzustellen.

12. System nach einem der Ansprüche 2 bis 11, wobei das Metallpulver-Erzeugungsmodul dazu konfiguriert ist, das Metallpulver durch direkte Reduktion der Metalloxide durch Wasserstoff oder durch Elektrolyse in alkalischem Medium zu regenerieren.

13. Verfahren zum Speichern und Erzeugen von Elektrizität, umfassend die folgenden Schritte:
- Aufnehmen von Energie aus einem Quellstromnetz unter Verwendung der Elektrizität des Quellstromnetzes, um Metallpulver aus dem Metalloxid wiederherzustellen (400);
- Erzeugen von Energie unter Verwendung des wiederhergestellten Metallpulvers als Brennstoff (500); und
- Zuführen der erzeugten Energie zu einem empfangenden Stromnetz, wobei das empfangende Stromnetz und das Quellstromnetz dasselbe Stromnetz bilden.

14. Verfahren nach Anspruch 13, wobei das bei der Verbrennung des Metallpulvers erzeugte Metalloxid anschließend dazu verwendet wird, Energie aus dem Quellstromnetz aufzunehmen.

15. Verfahren nach Anspruch 13 oder 14, wobei der Schritt des Aufnehmens von Energie durchgeführt wird, wenn ein Energieüberschuss in dem Quellstromnetz vorhanden ist, und die Schritte des Erzeugens und Zuführens der Energie durchgeführt werden, wenn ein Energiemangel in dem empfangenden Stromnetz vorhanden ist.

## Claims

1. A storage and electricity production system (100) configured to operate in a first mode in which it supplies energy to a receiving electrical grid (200B), and in a second mode in which it absorbs energy from a source electrical grid (200A), **characterized in that**:
- in said first mode, the system is configured to produce electricity using metal powder as fuel; and
- in said second mode, the system is configured to store energy using the electricity from the source grid to reconstitute the metal powder from the metal oxide, and **in that** the receiving electrical grid and the source electrical grid constitute the same electrical grid.

2. The system according to claim 1, comprising a power production module (103) configured to generate electricity by burning the metal powders, a metal powder production module (107) configured to reconstitute the metal powders from the metal oxides with electricity, and at least one transport means for transporting the metal powders and the metal oxides between the power production module and the metal powder production module.

3. The system according to claim 2, wherein the power production module and the metal powder production module are spaced apart from one another by a distance of less than 100km or preferably 50km.

4. The system according to claims 2 or 3, comprising a first storage module (101) for storing the metal powders, and a second storage module (105) for storing the metal oxides.

5. The system according to claim 4, wherein at least one of the storage modules comprises an atmosphere controlled in terms of humidity, pressure and/or gas composition.

6. The system according to claims 4 or 5, comprising at least one transport means for transporting the metal powders and the metal oxides between the first and second storage modules and the metal powder and power production modules.

7. The system according to any one of claims 2 to 6, wherein the production modules are spaced apart from the storage modules by a distance of less than 100km or preferably 50km.

8. The system according to claim 6, wherein the receiving electrical grid and the source electrical grid operate at a first voltage, and the storage and/or transport modules are supplied by a common electrical source at a second voltage lower than the first voltage.

9. The system according to claim 6, wherein the storage and/or transport modules are at least partially supplied by the power production module.

10. The system according to any one of claims 2 to 9, wherein the power production module is configured to supply a working fluid from the heat of combustion of metal powder in order to drive a turbo alternator set or other thermal machines producing electricity.

11. The system according to any one of claims 2 to 10, wherein the metal powder production module is configured to reconstitute the metal powder by electrolysis.

12. The system according to any one of claims 2 to 11, wherein the metal powder production module is configured to regenerate the metal powder by direct reduction of the metal oxides by hydrogen or by electrolysis in an alkaline medium.

13. A method for storing and producing electricity, comprising the following steps:
- absorbing energy from a source electrical grid using the electricity from the source electrical grid to reconstitute metal powder from the metal oxide (400);
- producing energy using the reconstituted metal powder as fuel (500); and
- supplying the produced energy to a receiving electrical grid, wherein the receiving electrical grid and the source electrical grid constitute the same electrical grid.

14. The method according to claim 13, wherein the metal oxide produced during the combustion of the metal powder is subsequently used to absorb energy from the source electrical grid.

15. The method according to claims 13 or 14, wherein the step of absorbing energy is carried out when there is an excess of energy on the source electrical grid, and the steps of producing and supplying energy are carried out when there is an insufficiency of energy on the receiving electrical grid.
